# EUROPEAN PATENT APPLICATION

(11) **EP 2 703 623 A2**
(43) Date of publication of application: **05.03.2014**
(21) Application number: 13180494.0
(22) Date of filing: 14.08.2013
(51) Int. Cl.: F02C 6/12

(54) **Turbocharger and engine cylinder head assembly**

(30) Priority: 28.08.2012 US 201213596627
(71) Applicant: Honeywell International Inc., Morristown, NJ 07962-2245 (US)
(72) Inventor: Lombard, Alain, Morristown, NJ New Jersey 07962-2245 (US); Kurtzmann, Johann, Morristown, NJ New Jersey 07962-2245 (US); Roberts, Quentin, Morristown, NJ New Jersey 07962-2245 (US); Marques, Manuel, Morristown, NJ New Jersey 07962-2245 (US)
(74) Representative: Houghton, Mark Phillip

(57) **Abstract**

A turbocharger (30) and engine cylinder head (20) assembly (10) includes a center housing rotating assembly (CHRA, 32) and an engine cylinder head defining a receptacle for receiving the CHRA, the engine cylinder head defining a compressor volute (46). A diffuser (44) is defined for receiving and diffusing the compressed air from the compressor wheel and supplying the compressed air to the compressor volute. The assembly includes a cap (80) formed separately from the engine cylinder head and removably secured to the engine cylinder head, the cap defining one wall of the diffuser. An opposite wall of the diffuser is defined either by the engine cylinder head or a portion of the center housing, depending on whether the CHRA slides into the receptacle compressor-wheel-first or turbine-wheel-first. The compressor volute can be located on a turbine side of the diffuser.

## Description

### CROSS-REFERENCE TO RELATED APPLICATIONS

This application is a continuation-in-part of U.S. Patent Application No. 13/425,891 filed on March 21, 2012, and of U.S. Patent Application No. 13/425,943 filed on March 21, 2012, both of which are currently pending, the entire disclosures of which are hereby incorporated herein by reference.

### BACKGROUND OF THE INVENTION

The present disclosure relates to exhaust gas-driven turbochargers.

In a typical turbocharger there is a compressor housing, a center housing, and a turbine housing. The compressor housing defines a volute that collects pressurized air from the compressor wheel for onward delivery to the air intake of an internal combustion engine. The center housing's main role is to house bearings for the shaft that connects the compressor wheel to the turbine wheel. The turbine housing defines a volute that receives exhaust gas from the engine and directs it into the turbine wheel, which is thereby driven to rotate and drive the compressor wheel.

Conventionally, all of the turbocharger housing members are separate components. The compressor housing typically defines not only the compressor volute but also a diffuser that receives pressurized air from the compressor wheel and diffuses it before delivering it into the volute. The diffuser is important in terms of compressor efficiency. In particular, it is important that the diffuser have the dimensions specified by the compressor designer, and accordingly it is generally necessary to machine the diffuser in order to achieve the accuracy that is needed. Such machining is difficult, however, because of the diffuser's location in the casting for the compressor housing.

The machining difficulty is exacerbated when the compressor volute is integrated into an engine cylinder head, as is the case with more-recently proposed turbocharger designs (as described, for example, in the above-noted '891 and '943 applications related to the present disclosure) in which such integration is employed in order to simplify manufacture of the turbocharger and its incorporation into the engine system.

### BRIEF SUMMARY OF THE DISCLOSURE

The present disclosure aims to address the above-noted issues. Described herein is a turbocharger and engine cylinder head assembly in which the compressor volute is integrated into the cylinder head, but in which the diffuser is easily accessible for machining to high precision. In embodiments illustrated and described below, a turbocharger and engine cylinder head assembly comprises:

a center housing rotating assembly comprising a center housing defining a bore therethrough, bearings housed in the bore, a shaft rotatably supported in the bearings, a compressor wheel affixed to one end of the shaft, and a turbine wheel affixed to an opposite end of the shaft;

an engine cylinder head defining a receptacle for receiving the center housing rotating assembly, the engine cylinder head defining a compressor volute;

a diffuser for receiving and diffusing the compressed air from the compressor wheel and supplying the compressed air to the compressor volute; and

a cap formed separately from the engine cylinder head and removably secured to the engine cylinder head, the cap defining one wall of the diffuser.

Two basic embodiments are disclosed. In one embodiment, an opposite wall of the diffuser is defined by a portion of the engine cylinder head. In the other embodiment, the opposite wall of the diffuser is formed by a portion of the center housing. In both cases, the surface forming the opposite wall of the diffuser is easily accessible and thus readily machinable.

In the case of the former embodiment, the assembly is configured so that the center housing rotating assembly is axially received, turbine-wheel-first, into the receptacle in the engine cylinder head. The center housing includes a radially outwardly extending flange defining the opposite wall of the diffuser. The surface of the flange forming the diffuser wall is an easily accessible exterior surface.

In the other embodiment, the assembly is configured so that the center housing rotating assembly is axially received, compressor-wheel-first, into the receptacle in the engine cylinder head. In this case, a portion of the engine cylinder head defines the opposite wall of the diffuser. Again, the surface of the cylinder head forming the diffuser wall is an easily accessible exterior surface.

Variations of the noted embodiments are possible. For example, in either embodiment, the assembly can include a wastegate unit operable for allowing exhaust gas to bypass the turbine wheel when the wastegate unit is open and preventing exhaust gas from bypassing the turbine wheel when the wastegate unit is closed. An actuator is connected by a linkage to the wastegate unit to selectively vary the degree of openness of the wastegate unit.

### BRIEF DESCRIPTION OF THE SEVERAL VIEWS OF THE DRAWING(S)

Having thus described the disclosure in general terms, reference will now be made to the accompanying drawings, which are not necessarily drawn to scale, and wherein:

FIG. 1 is a perspective view of a turbocharger and engine cylinder head assembly in accordance with a first embodiment of the present invention;

FIG. 2 is a front view of the turbocharger and engine cylinder head assembly of FIG. 1, partly sectioned, and with the actuator, linkage, and wastegate unit removed;

FIG. 3 is a cross-sectional view of the turbocharger and engine cylinder head assembly of FIG. 1;

FIG. 4 is a partly sectioned front view, similar to FIG. 2, showing a turbocharger and engine cylinder head assembly in accordance with a second embodiment; and

FIG. 5 is a cross-sectional view through the turbocharger and engine cylinder head assembly of FIG. 4.

### DETAILED DESCRIPTION OF THE DRAWINGS

The present disclosure now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

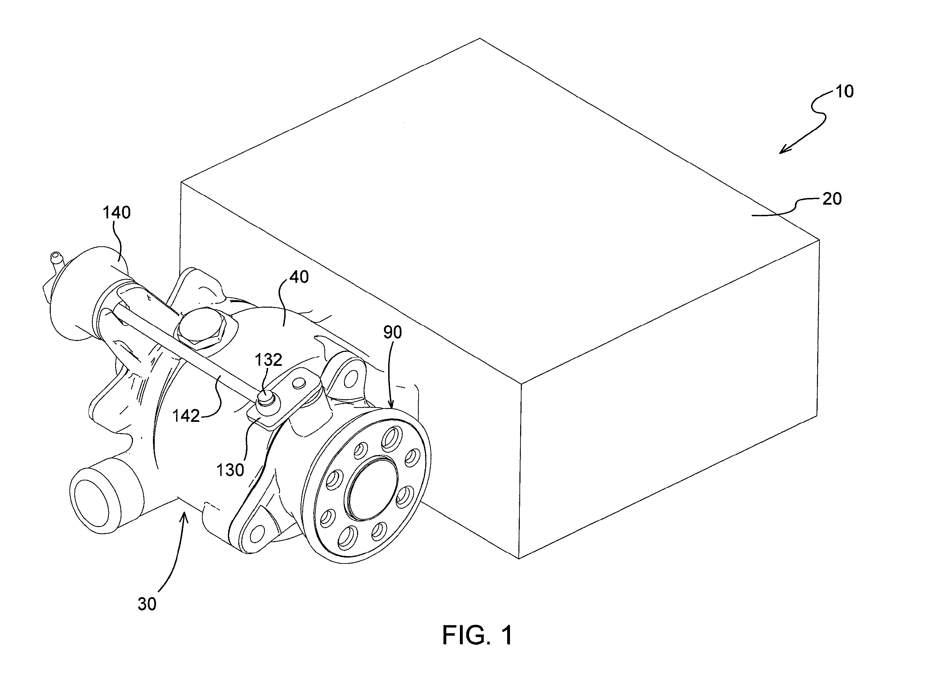

A turbocharger and engine cylinder head assembly **10** in accordance with one embodiment of the invention is depicted in FIGS. 1-3. With reference initially to FIG. 1, the assembly **10** comprises an engine cylinder head **20** (illustrated only schematically) on which a turbocharger **30** is mounted. The engine cylinder head **20** comprises a casting that is configured to sit atop the engine block, above the engine cylinders. The head **20** typically houses components of the intake and exhaust valves for the cylinders and defines intake and exhaust passages through which intake air is delivered to the cylinders and exhaust gases are routed away from the cylinders, respectively. For each cylinder, the head defines at least one intake passage and at least one exhaust passage (not shown). The head is configured to route the exhaust gases produced in the engine cylinders through the exhaust passages into an exhaust manifold (not shown) that feeds exhaust gases to the turbine of the turbocharger.

The cylinder head **20** defines a housing member **40** as an integral part thereof. The head proper and the housing member collectively can be, for example, a one-piece casting. As further described below, the housing member **40** is configured to define a number of features that would conventionally be defined by separate housing members of the turbocharger **30.**

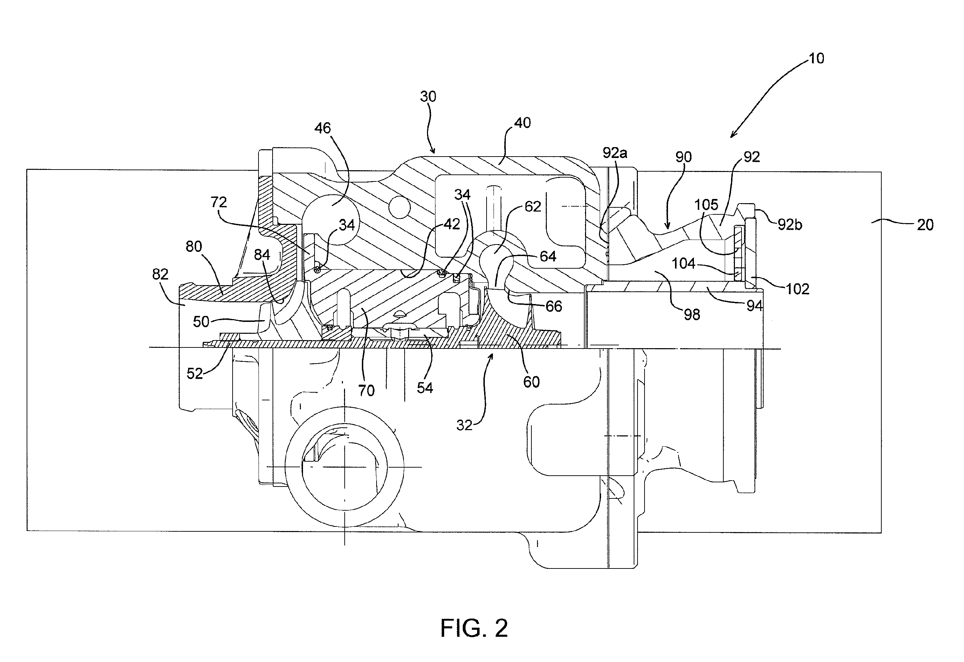

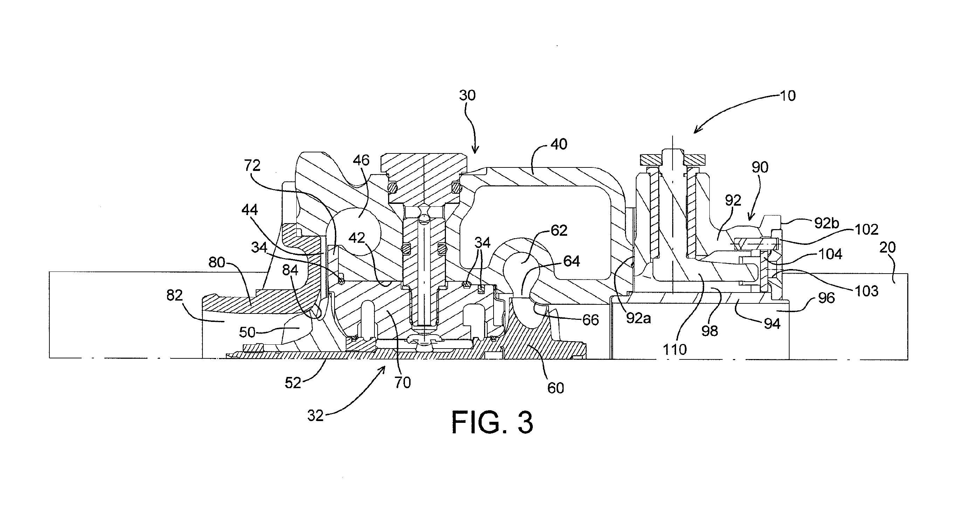

With reference to FIGS. 2 and 3, the turbocharger **30** includes a "cartridge" **32,** also referred to herein as a center housing rotating assembly (CHRA). The CHRA **32** comprises a compressor wheel **50** affixed to one end of a shaft **52** and a turbine wheel **60** affixed to the opposite end of the shaft **52,** bearings **54** that rotatably support the shaft **52,** and a center housing **70** that houses the bearings **54** and defines oil passages for supplying oil to and scavenging oil from the bearings, and (optionally) water passages for circulating coolant through the center housing.

In accordance with the invention, the housing member **40** of the cylinder head **20** defines a receptacle **42** that receives the CHRA **32.** The receptacle **42** is a stepped, generally cylindrical bore extending axially through the housing member **40.** The receptacle is configured to allow the CHRA **32** to be slid axially into the receptacle, turbine wheel first (i.e., to the right in FIGS. 2 and 3). Thus, the receptacle **42** for example can have various portions of differing inside diameters, with steps transitioning between adjacent portions of different diameters. The steps are compressor-side-facing, i.e., each step faces axially toward the compressor side of the CHRA (to the left in FIGS. 2 and 3), and thus the receptacle becomes progressively smaller in diameter in the direction from the compressor toward the turbine. The center housing **70** of the CHRA **32** is correspondingly stepped to substantially match the stepped configuration of the receptacle **42.** There are seals (e.g., O-rings) **34** between the center housing **70** and the receptacle **42** for sealing the interface therebetween and to separate or isolate the oil passages and the water passages (if present) in the center housing.

As noted, the housing member **40** defines features that in conventional turbochargers would be defined by separate turbine and compressor housings. Specifically, the housing member **40** of the engine cylinder head **20** defines a compressor volute **46** that receives compressed air from the compressor wheel **50.** The head **20** can also define other turbocharger features such as a turbine volute **62** for receiving exhaust gas from the exhaust gas manifold of the engine, a turbine nozzle **64** for directing exhaust gas from the turbine volute into the turbine wheel **60,** and a turbine contour **66** that generally follows the outer contour of the blades of the turbine wheel **60.**

The turbocharger and engine cylinder head assembly **10** further comprises a cap **80** that defines one wall of a compressor diffuser **44** through which air compressed by the compressor wheel **50** passes radially outwardly and into the compressor volute **46.** An opposite wall of the diffuser **44** is formed by the center housing **70** of the CHRA **32.** Specifically, the center housing **70** defines a flange **72** that extends radially outwardly from the compressor end of the center housing, the opposite wall of the diffuser **44** is defined by the flange **72.** The flange **72** abuts an end surface of the engine cylinder head when the CHRA **32** is fully inserted into the receptacle **42.** The cap **80** is affixed (e.g., by threaded fasteners) to the housing member **40.** The cap **80** can also define an axial inlet **82** for the compressor and a compressor contour **84** that generally follows the outer contour of the blades of the compressor wheel **50.**

The last major component of the turbocharger and engine cylinder head assembly **10** is an optional wastegate or turbine bypass unit **90.** The wastegate unit is operable to allow some or substantially all of the exhaust gases to bypass the turbine wheel **60** under certain operating conditions. In the illustrated embodiment, the wastegate unit **90** is a rotary turbine bypass (RTB) unit generally as described in Applicant's co-pending U.S. Application Serial No. 12/611,816 filed on November 3, 2009, Application Serial No. 12/711,434 filed on April 30, 2010, Application Serial No. 12/966,343 filed December 13, 2010, and Application Serial No. 61/422,485 filed December 13, 2010, the entire disclosures of said applications being hereby incorporated herein by reference.

With reference to FIGS. 2 and 3, the RTB unit **90** includes a valve housing assembly comprising a main housing **92** and a housing insert **94.** The main housing **92** defines a passage extending through the main housing from a first side **92a** to a second side **92b** thereof. The housing insert **94** comprises a generally tubular member that is disposed in the passage of the main housing such that the interior of the housing insert **94** defines a central flow passage **96,** and an annular space between the outer surface of the housing insert **94** and an inner surface of the main housing **92** defines an annular flow passage (also referred to herein as a wastegate passage) **98** that surrounds the central flow passage **96.**

The RTB unit **90** further comprises a stationary valve seat **102** and a rotary valve member **104** in abutting engagement with the valve seat. The valve seat **102** and valve member **104** are arranged in the annular space between the main housing **92** and the housing insert **94.** The valve member **104** is prevented from moving axially upstream by a shoulder defined by the main housing **92,** although during operation pressure of the exhaust gas urges the valve member **104** in the downstream direction. The valve member **104** is not constrained by the main housing but is free to rotate about its axis and to move axially against the valve seat **102.** The valve seat **102** is prevented from moving axially, radially, or rotationally. The valve seat **102** is a generally flat ring-shaped or annular member having a plurality of orifices **103** (FIG. 3) circumferentially spaced apart about a circumference of the valve seat, the orifices **103** extending generally axially between the upstream and downstream faces of the valve seat. The orifices **103** can be uniformly or non-uniformly spaced about the circumference of the valve seat.

The rotary valve member **104** is a generally flat ring-shaped or annular member having a plurality of orifices **105** (FIG. 2) circumferentially spaced apart about a circumference of the valve member, the orifices **105** extending generally axially between the upstream and downstream faces of the valve member. The orifices **105** can be uniformly or non-uniformly spaced about the circumference of the valve member. The number and spacing of the orifices **105** in the valve member can be the same as the number and spacing of the orifices **103** in the valve seat. However, non-uniform spacing of the orifices **105** is also possible and can be advantageous in some circumstances; furthermore, the spacings of the orifices **103** and **105** do not have to be the same, and in some cases it can be advantageous for the spacings to be different. The main housing **92** and the housing insert **94** both define substantially circular bearing surfaces for the outer and inner edges of the rotary valve member **104** and there are clearances therebetween, so that the valve member **104** can be rotated in one direction or the opposite direction about its central longitudinal axis in order to vary a degree of alignment between the valve member orifices **105** and the valve seat orifices **103.**

The valve member **104** is engaged by the distal end of an L-shaped drive arm **110** (FIG. 3) a portion of which passes through a bushing installed in a bore defined in the main housing **92,** the bore connecting with the annular flow passage **98.** The proximal (radially outer) end of the drive arm **110** is located outside the main housing **92** and is rigidly affixed to a link **130.** An actuator **140** is provided for rotating the drive arm **110.** The link **130** has a connecting member **132** that is offset from the rotation axis of the drive arm **110** and that is coupled to an actuator rod **142** of the actuator **140** such that extension of the actuator rod causes the link **130** to rotate the drive arm **110** in one direction and retraction of the actuator rod causes the link to rotate the drive arm **110** in the opposite direction. As a result, the drive arm **110** causes the valve member **104** to be rotated in one direction or the opposite direction about its axis.

Thus, the turbocharger and engine cylinder head assembly **10** has the following major components: the CHRA **32,** the cap **80,** the wastegate unit **90,** and the cylinder head **20** with its integral housing member **40.** Viewed from the standpoint of the turbocharger supplier, there are only three main components or modules: the CHRA **32,** the cap **80,** and the wastegate unit **90.** Integration of certain features into the engine cylinder head as described above thereby allows a substantial simplification of the turbocharger components to be supplied to the engine manufacturer or assembler. Additionally, the diffuser **44** is defined by two surfaces (respectively defined by the cap **80** and the center housing flange **72)** that are easily machined or otherwise formed to high precision, such that the dimensions of the diffuser **44** can be controlled to a high degree of accuracy. Furthermore, the dimensions of the diffuser can easily be changed by substituting a cap **80** of different configuration.

Embodiments of the invention can also include a "reversed" compressor volute **46.** In a conventional turbocharger, the compressor volute is located on the compressor side of the diffuser through which the pressurized air is led into the volute, and accordingly the compressor volute is part of the cast compressor housing. This design has been essentially standard for many decades.

In contrast, the turbocharger and engine cylinder head assembly described herein, in the illustrated embodiments, employs a substantially different design in which the compressor volute **46** is reversed so that it is located on the turbine side of the diffuser **44.** Locating the compressor volute on the turbine side of the diffuser improves accessibility to the diffuser area for machining.

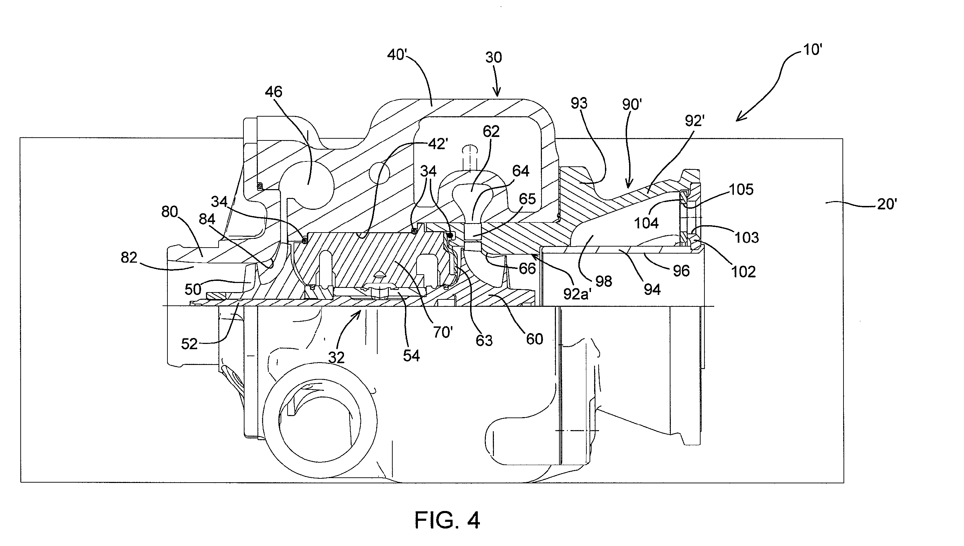

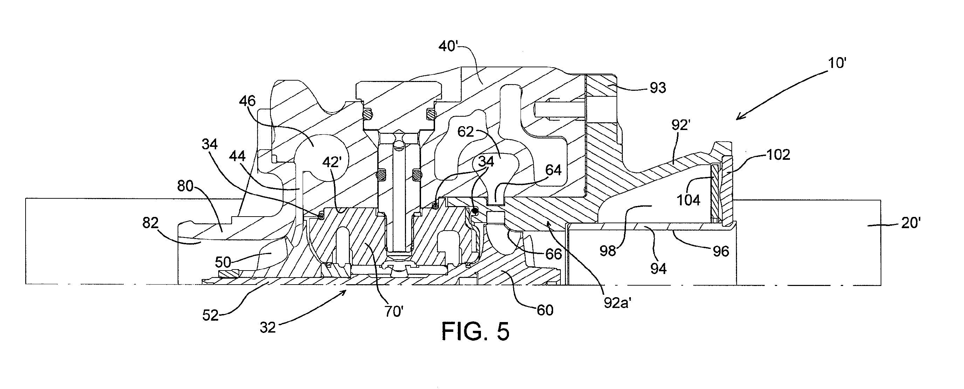

A turbocharger and engine cylinder head assembly **10'** in accordance with a second embodiment of the invention is depicted in FIGS. 4 and 5. The assembly **10'** has many similarities to the assembly **10** described above, and the same reference numerals are used in FIGS. 4 and 5 to refer to substantially similar (although not necessarily identical) features appearing in FIGS. 1-3. Features of the second embodiment in which the primary differences reside are denoted by similar reference numerals but with a prime (') superscript. Thus, assembly **10'** comprises an engine cylinder head **20'** (illustrated only schematically) on which a turbocharger **30** is mounted. The engine cylinder head **20'** has some differences relative to the head of the previous embodiment, on account of the differently configured turbocharger with which it is assembled.

The cylinder head **20'** defines a housing member **40'** as an integral part thereof. The head proper and the housing member collectively can be, for example, a one-piece casting. As further described below, the housing member **40'** is configured to define a number of features that would conventionally be defined by separate housing members of the turbocharger **30.**

With reference to FIGS. 4 and 5, the turbocharger **30** includes a "cartridge" or center housing rotating assembly (CHRA) **32.** The CHRA **32** comprises a compressor wheel **50** affixed to one end of a shaft **52** and a turbine wheel **60** affixed to the opposite end of the shaft **52,** bearings **54** that rotatably support the shaft **52,** and a center housing **70'** that houses the bearings **54** and defines oil passages for supplying oil to and scavenging oil from the bearings, and (optionally) water passages for circulating coolant through the center housing.

The housing member **40'** of the cylinder head **20'** defines a receptacle **42'** that receives the CHRA **32.** The receptacle **42'** is a stepped, generally cylindrical bore extending axially through the housing member **40'.** The receptacle is configured to allow the CHRA **32** to be slid axially into the receptacle, compressor wheel first (i.e., to the left in FIGS. 4 and 5). Thus, the receptacle **42'** for example can have various portions of differing inside diameters, with steps transitioning between adjacent portions of different diameters. The steps are turbine-side-facing, i.e., each step faces axially toward the turbine side of the CHRA (to the right in FIGS. 4 and 5), and thus the receptacle becomes progressively smaller in diameter in the direction from the turbine toward the compressor. The center housing **70'** of the CHRA **32** is correspondingly stepped to substantially match the stepped configuration of the receptacle **42'.** There are seals (e.g., O-rings) **34** between the center housing **70'** and the receptacle **42'** for sealing the interface therebetween and to separate or isolate the oil passages and the water passages (if present) in the center housing.

The assembly also includes a cap **80** that defines one wall of the diffuser **44** for the compressor. The cap **80** can also define a compressor inlet **82** and a compressor contour **84.** In the illustrated embodiment, the cap **80** is formed separately from the housing member **40'** and is attached to the housing member by threaded fasteners (not shown). The housing member **40'** of the engine cylinder head **20'** defines the opposite wall of the diffuser **44.** The housing member also defines a "reversed" compressor volute **46** that receives the air from the diffuser, and a turbine volute **62** for receiving exhaust gas from an engine.

A wastegate unit **90'** generally similar to that of the previously described embodiment is connected to the housing member **40'.** The housing member **92'** of the wastegate unit **90'** includes a portion **92a'** that is received into the receptacle **42'** of the engine cylinder head housing member **40'** and that defines a turbine nozzle **64** and a turbine contour **66.** The turbine nozzle comprises an aperture extending substantially 360 degrees about the housing member **92'** and extending from a radially outer surface to a radially inner surface of the housing member. An array of circumferentially spaced vanes **65** extend across the turbine nozzle **64.** The vanes **65** provide a flow-guiding function for guiding the exhaust gas into the turbine wheel **60** in an advantageous direction. In the illustrated embodiment, the wastegate housing **92'** also includes a portion that defines a bore into which an end of the center housing **70'** is received. A separate heat shield **63** is captured between the end of the center housing and the portion of the wastegate housing **92'.**

An advantage of the turbocharger cartridge and engine cylinder head assembly **10'** is that the CHRA **32** having the wastegate unit **90'** constitutes a single component that can simply be inserted into the receptacle **42'** defined by the housing member **40'** of the cylinder head **20'.** The assembly is completed by affixing the wastegate housing **92'** and the cap **80** to the housing member **40'** of the cylinder head, such as with threaded fasteners (not shown). Integration of certain features into the engine cylinder head as described above thereby allows a substantial simplification of the turbocharger components to be supplied to the engine manufacturer or assembler. Additionally, as noted for the previous embodiment, the formation of the diffuser **44** by cooperation between the cap **80** and an easily accessible surface (in this case, of the engine cylinder head) facilitate precise formation of the diffuser. Further, the "reversed" compressor volute configuration further improves accessibility to the diffuser area for machining.

The embodiments described above thus allow a highly precise diffuser **44** to be achieved even while integrating the compressor volute **46** into the engine cylinder head **20.**

A further advantage of the described embodiments is that the compressor designer has improved flexibility in altering the configuration of the inlet **82** and/or contour **84** in a simple fashion by modifying the relatively low-cost cap **80** rather than redesigning a complex compressor housing to make such changes. The cap **80** also can be of a different material from other housing components if desired.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A turbocharger and engine cylinder head assembly, comprising:
a center housing rotating assembly comprising a center housing defining a bore therethrough, bearings housed in the bore, a shaft rotatably supported in the bearings, a compressor wheel affixed to one end of the shaft, and a turbine wheel affixed to an opposite end of the shaft;
an engine cylinder head defining a receptacle for receiving the center housing rotating assembly, the engine cylinder head defining a compressor volute;
a diffuser for receiving and diffusing the compressed air from the compressor wheel and supplying the compressed air to the compressor volute; and
a cap formed separately from the engine cylinder head and removably secured to the engine cylinder head, the cap defining one wall of the diffuser;
wherein an opposite wall of the diffuser is defined by one of the engine cylinder head and the center housing.

2. The turbocharger and engine cylinder head assembly of claim 1, configured so that the center housing rotating assembly is axially received, turbine-wheel-first, into the receptacle in the engine cylinder head, wherein the center housing includes a radially outwardly extending flange defining said opposite wall of the diffuser.

3. The turbocharger and engine cylinder head assembly of claim 1, configured so that the center housing rotating assembly is axially received, compressor-wheel-first, into the receptacle in the engine cylinder head, wherein the portion of the engine cylinder head defines said opposite wall of the diffuser.

4. The turbocharger and engine cylinder head assembly of claim 1, wherein the compressor volute is located on a turbine side of the diffuser.

5. The turbocharger and engine cylinder head assembly of claim 2, wherein the engine cylinder head defines a turbine volute.

6. The turbocharger and engine cylinder head assembly of claim 5, wherein the engine cylinder head defines a turbine nozzle and a turbine contour.

7. The turbocharger and engine cylinder head assembly of claim 3, wherein the engine cylinder head defines a turbine volute.

8. The turbocharger and engine cylinder head assembly of claim 7, further comprising an additional housing member formed separately from the engine cylinder head and having a portion received into a turbine end of the receptacle in the engine cylinder head, wherein said portion of the additional housing member defines a turbine nozzle and a turbine contour.

9. The turbocharger and engine cylinder head assembly of claim 8, wherein said portion of the additional housing member defines vanes for the turbine nozzle.

10. The turbocharger and engine cylinder head assembly of claim 8, wherein the additional housing member houses a wastegate operable to allow exhaust gas to bypass the turbine wheel.

11. The turbocharger and engine cylinder head assembly of claim 1, wherein the cap defines an inlet for the compressor.

12. The turbocharger and engine cylinder head assembly of claim 1, wherein the cap further defines a compressor contour.
